# EUROPEAN PATENT APPLICATION

(11) **EP 4 782 712 A1**
(43) Date of publication of application: **29.07.2026**
(21) Application number: 24868056.3
(22) Date of filing: 28.08.2024
(51) Int. Cl.: F16C 41/00, F16C 19/06, F16C 33/58, G08C 17/00

(54) **BEARING DEVICE**

(30) Priority: 20.09.2023 JP 2023152285
(71) Applicant: NTN Corporation, Osaka-shi Osaka 530-0005 (JP)
(72) Inventor: KOIKE, Takashi, Iwata-shi, Shizuoka 438-8510 (JP); FUKUSHIMA, Yasuyuki, Iwata-shi, Shizuoka 438-8510 (JP)
(74) Representative: Grünecker Patent- und Rechtsanwälte PartG mbB
(86) International application number: PCT/JP2024/030709
(87) International publication number: WO 2025/062976

(57) **Abstract**

Provided is a bearing device including a rolling bearing (10) provided with a sensor (22) and a wireless communication means (23) of a sensor unit (20). In order to improve the dust-proofness and watertightness of the communication means (23) while reducing deterioration in communication performance and ease of assembly, the communication means (23) includes a circuit board (25) having a wireless communication circuit (26) mounted thereon, and an external antenna (28) connected to the circuit board (25) via a cable (27), the circuit board (25) and the communication circuit (26) are coated with a coating film (CT), the external antenna (28) is not coated with the film (CT), and a space is provided between the external antenna (28) and a resin cover (24) covering the communication means (23).

## Description

### TECHNICAL FIELD

The present invention relates to a bearing device including a rolling bearing provided with a sensor and a wireless communication means.

### BACKGROUND ART

Conventionally, bearing devices are known which include a rolling bearing provided with a sensor for detecting a bearing condition and a wireless communication means for transmitting information from the sensor to the outside. Some of such bearing devices include a circuit board on which the sensor and a wireless module as the wireless communication means are mounted, and which is coated with a potting material, thereby improving the dust-proofness and watertightness.

However, in a bearing device that includes the circuit board coated as described above, if an antenna for wireless communication included in the wireless module (hereinafter also referred to as the "internal antenna") comes into contact with a resin as the potting material, the wavelength of an electric wave is shortened due to the dielectric property of the resin, and as a result, communication performance could be deteriorated.

In contrast thereto, the below-identified Patent Document 1 discloses a bearing device (sensor-equipped bearing) in which, as shown in Fig. 6, a sensor unit 60 is disposed on one side of a deep groove ball bearing 50 in which balls 53 as rolling elements are disposed between an outer ring 51 and an inner ring 52, the sensor unit 60 comprising a circuit board 62 having a wireless module 61 mounted thereon; a holder (lid member) 63 accommodating the circuit board 62; a resin 64 with which the holder 63 is filled; and a cover 65 that provides an air layer between an internal antenna of the wireless module 61 and the resin 64, and the internal antenna does not come into contact with the resin 64, thereby reducing deterioration in communication performance.

### PRIOR ART DOCUMENT(S)

### PATENT DOCUMENT(S)

Patent Document 1: Japanese Unexamined Patent Application Publication No. 2021-63591

### SUMMARY OF THE INVENTION

### PROBLEMS TO BE SOLVED BY THE INVENTION

However, the bearing device of Patent Document 1 has a problem in that, during assembly, a small cover 65 which covers only the wireless module 61, which includes the internal antenna, needs to be attached to the circuit board 62 in a narrow space on the inner side of the holder (lid member) 63, and this is time-consuming.

In view of the above, it is an object of the present invention to provide a bearing device including a rolling bearing provided with a sensor and a wireless communication means, wherein the dust-proofness and watertightness of the wireless communication means are improved while reducing deterioration in communication performance and ease of assembly.

### MEANS FOR SOLVING THE PROBLEMS

In order to achieve the above object, the present invention provides a bearing device comprising a rolling bearing including an outer ring, an inner ring disposed on a radially inner side of the outer ring, and a plurality of rolling elements rollably disposed between the outer ring and the inner ring; a sensor configured to detect a condition of the rolling bearing; and a wireless communication means for transmitting information detected by the sensor to an outside, wherein the wireless communication means includes a circuit board, a wireless communication circuit mounted on the circuit board, and an antenna disposed separately from the circuit board and connected to the circuit board via a cable, and wherein the circuit board and the wireless communication circuit are coated with a coating film, and the antenna is not coated with the coating film (arrangement 1).

With this arrangement 1, since the circuit board and the wireless communication circuit mounted thereon of the wireless communication means are coated with the coating film, the dust-proofness and watertightness of the wireless communication means can be improved. Since the antenna disposed separately from the circuit board (hereinafter also referred to as the "external antenna") is not coated with the coating film, this prevents wavelength shortening, due to the dielectric property of the coating film, of an electric wave, thereby preventing deterioration in communication performance. In addition, since the operation of connecting the external antenna and the circuit board that has been coated with the coating film in advance is not time-consuming during assembly, deterioration in ease of assembly can also be reduced.

Preferably, in the above arrangement 1, an arrangement 2 may be used in which the cable is connected to a connector mounted on the circuit board, wherein the connector is not coated with the coating film. With this arrangement, connection failure between the cable and the connector can be reliably avoided.

In addition, in the above arrangement 1 or 2, an arrangement 3 may be used in which a holder for holding the sensor and the wireless communication means is fixed to a stationary bearing ring which is one of the outer ring and the inner ring, and the holder includes an annular, circular plate portion opposed to the rolling elements, the circuit board and the antenna are fixed to a surface of the circular plate portion, wherein a resin cover covering the wireless communication means is attached to the holder, and a space is provided between the antenna and the cover. With this arrangement, the dust-proofness and watertightness of the entire wireless communication means including the antenna (i.e., the external antenna) can further be improved without deterioration in communication performance.

### EFFECTS OF THE INVENTION

As described above, in the present invention, an external antenna disposed separately from a circuit board having a wireless communication circuit mounted thereon and connected to the circuit board via a cable is used as an antenna of the wireless communication means of the bearing device, wherein the circuit board and the wireless communication circuit are coated with a coating film, and the external antenna is not coated with the coating film. Accordingly, the dust-proofness and watertightness of the wireless communication means can be improved while reducing deterioration in communication performance and ease of assembly of the bearing device.

### BRIEF DESCRIPTION OF THE DRAWINGS

Fig. 1 is a perspective view showing the external appearance of a bearing device according to an embodiment of the present invention.
Fig. 2 is a vertical sectional front view of a portion of the bearing device shown in Fig. 1.
Fig. 3 is a right-side view showing the sensor unit of Fig. 1, with a portion of a cover broken away.
Fig. 4 is an exploded perspective view of the sensor unit of Fig. 1.
Fig. 5 is a sectional view of a portion of the sensor unit of Fig. 1, taken along the circumferential direction.
Fig. 6 is a vertical sectional front view of a portion of a conventional bearing device.

### BEST MODE FOR CARRYING OUT THE INVENTION

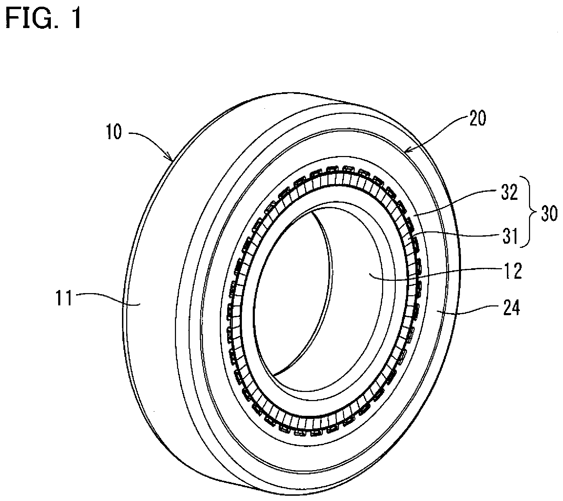

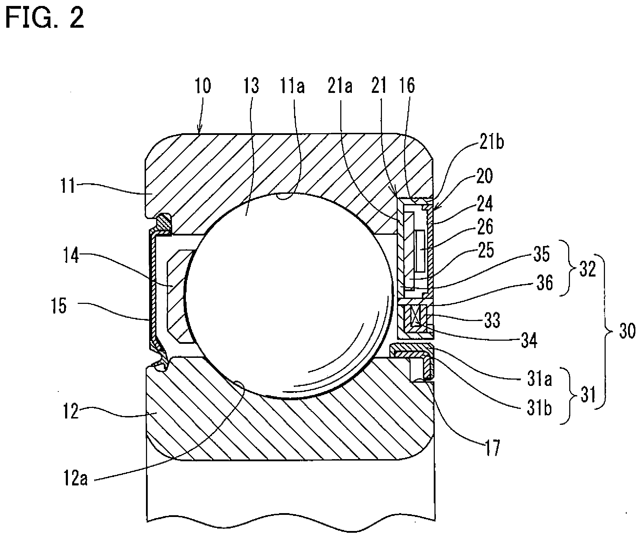

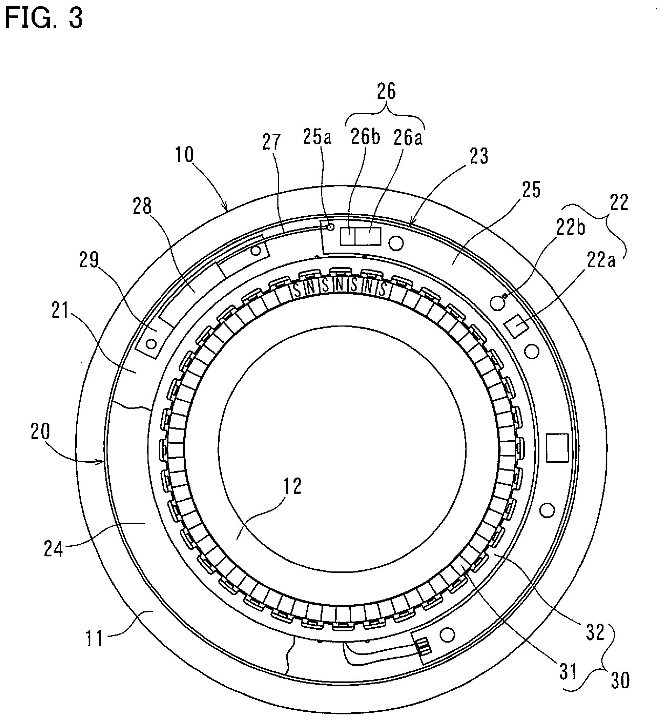

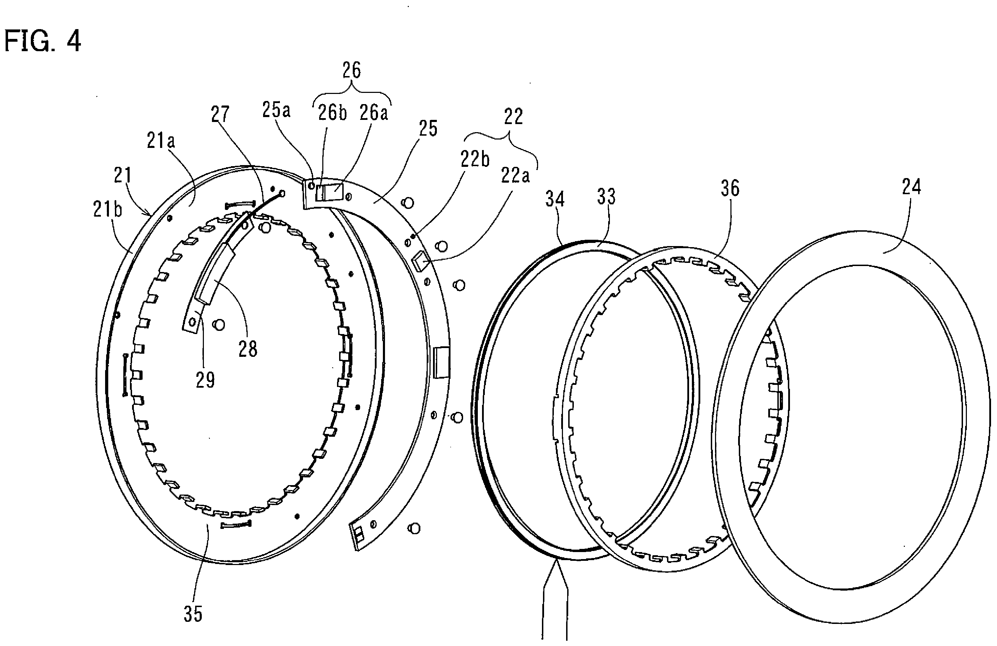

An embodiment of the present invention will be described with reference to Figs. 1 to 5 of the accompanying drawings. As shown in Figs. 1 and 2, a bearing device according to this embodiment includes a rolling bearing 10 provided with a sensor unit 20 and a power generator 30 that are attached to one axial end of the rolling bearing 10.

In the following description, the direction around the center axis (bearing center axis) of the rolling bearing 10 is referred to as the "circumferential direction", "circumferential", or "circumferentially". The direction along the bearing center axis is referred to as the "axial direction", "axial", or "axially". The direction orthogonal to the bearing center axis is referred to as the "radial direction", "radial", or "radially". In addition, one axial side corresponds to the right side in Fig. 2, and the other axial side corresponds to the left side in Fig. 2.

The rolling bearing 10 is a deep groove ball bearing comprising an outer ring 11 having a raceway groove 11a on its inner periphery; an inner ring 12 having a raceway groove 12a on its outer periphery; a plurality of balls 13 as rolling elements that are rollably disposed between the raceway groove 11a of the outer ring 11 and the raceway groove 12a of the inner ring 12; a cage 14 that rollably retains the plurality of balls 13 at equal intervals; and a sealing member 15 that closes the other axial side of the bearing space between the outer ring 11 and the inner ring 12. The outer ring 11 is a stationary ring that is fixed to a housing or the like (not shown), and the inner ring 12 is a rotating ring that is attached to a rotary shaft (not shown) so as to rotate in unison with the rotary shaft.

In addition, an annular cutout 16 is formed on the one axial end of the inner peripheral surface of the outer ring 11, and an annular cutout 17 is formed on the one axial end of the outer peripheral surface of the inner ring 12. The sensor unit 20 and the power generator 30 are disposed between the cutouts 16 and 17.

As shown in Figs. 2 to 4, the sensor unit 20 includes a holder 21 that constitutes a part of the power generator 30 as described later; a sensor 22 and a wireless communication means 23 that are held on the holder 21; and a lid-shaped cover 24 that covers the sensor 22 and the wireless communication means 23.

The holder 21 is formed by pressing a single metal plate, and includes an annular, circular plate portion 21a extending radially and circumferentially; and a fitting portion 21b protruding annularly from the outer peripheral portion of the circular plate portion 21a toward the one axial side. The holder 21 is fixed to the outer ring 11 by press-fitting the fitting portion 21b into the cutout 16 of the outer ring 11 with the circular plate portion 21a opposed to the balls 13 of the rolling bearing 10.

The sensor 22 is configured to detect a condition of the rolling bearing 10 (such as the internal temperature of the bearing, vibration, or rotational speed). In this embodiment, an acceleration sensor 22a and a temperature sensor 22b are held by the holder 21. The type and number of sensors used can be changed as appropriate.

The wireless communication means 23 includes a circuit board 25; a wireless communication circuit 26 mounted on the circuit board 25; and an antenna (external antenna) 28 disposed separately from the circuit board 25, and connected to the circuit board 25 via a cable (coaxial cable) 27.

The circuit board 25 is formed into a circular-arc plate shape, and is fixed, with screws, to the surface of the circular plate portion 21a of the holder 21 on the one axial side. In addition to the wireless communication circuit 26, the sensor 22, a power supply circuit (not shown), and other components are mounted on this circuit board 25.

A wireless module including an IC chip 26a having a wireless function and an antenna (internal antenna) 26b which are disposed on a base substrate is used as the wireless communication circuit 26. However, the internal antenna 26b is not used, and an antenna terminal (not shown) is connected to a connector 25a mounted on the circuit board 25. The connector 25a and the external antenna 28 are connected together via the cable 27. As the wireless communication circuit, an IC chip that does not include an internal antenna may be used. In that case, too, the antenna terminal of the IC chip is connected to the connector 25a of the circuit board 25.

The external antenna 28 is fixed to a mounting plate 29 having a circular-arc plate shape, and the mounting plate 29 is fixed, with screws, to the surface of the circular plate portion 21a of the holder 21 on the one axial side so as to be located at a position circumferentially spaced apart from the circuit board 25.

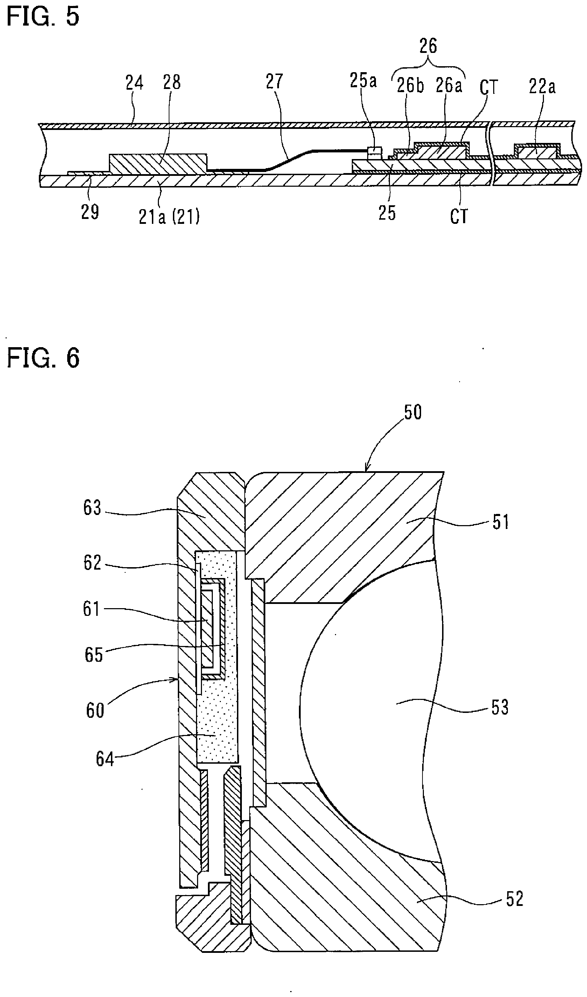

As shown in Fig. 5, the circuit board 25 and electronic components mounted on the circuit board 25, such as the wireless communication circuit 26 and the sensor 22 (i.e., the acceleration sensor 22a and the temperature sensor 22b), are coated with a resin coating film CT having water-repellent and oil-repellent properties.

The coating film CT is a thin film having a thickness of tens of micrometers to 200 µm, and is formed by immersing a component to be coated in a coating agent or by applying a coating agent to a component to be coated by means of a brush. Such a coating agent is selected in accordance with the usage conditions from among, e.g., urethane-based, acrylic-based, silicone-based, olefin-based, and fluorine-based ones.

While, as described above, the circuit board 25 is coated with the coating film CT, the connector 25a on the circuit board 25 and a peripheral area thereof are not coated with the coating film CT so as to avoid poor contact with the cable 27. In addition, neither the cable 27, which are connected to the connector 25a, nor the external antenna 28 is coated with the coating film CT, and this prevents wavelength shortening, due to the coating film CT, of an electric wave emitted from the external antenna 28.

Further, as shown in Figs. 2 to 4, the cover 24 is a resin member including an annular, circular plate portion and annular protrusions that protrude axially from the outer and inner peripheral portions of the circular plate portion, respectively, and the annular protrusion on the outer peripheral portion is fitted to the inner periphery of the fitting portion 21b of the holder 21, thereby covering the wireless communication means 23 (i.e., the circuit board 25, the wireless communication circuit 26, the cable 27, and the external antenna 28) and the electronic components mounted on the circuit board 25, such as the sensor 22. A space is provided between this cover 24 and the external antenna 28, and this also prevents wavelength shortening, due to the cover 24, of an electric wave (see Fig. 5).

The power generator 30 is a claw-pole type power generator comprising a magnetic ring 31 disposed so as to rotate in unison with the inner ring 12 of the rolling bearing 10, and an annular stator 32 fixed to the outer ring 11 so as to be radially opposed to the magnetic ring 31 with an air gap therebetween.

The magnetic ring 31 is a rotor configured to generate a rotating magnetic field relative to the stator 32, and comprises a magnetic rubber magnet 31a magnetized with circumferentially alternating N and S poles; and a metal core 31b to which the magnet 31a is bonded around the entire circumference. This magnetic ring 31 includes a flange at one end of its tubular portion, and the other end of the tubular portion is press-fitted or bonded to the peripheral edge portion of the cutout 17 of the inner ring 12, whereby the magnetic ring 31 is fixed to the inner ring 12.

The stator 32 is a stator configured to guide magnetic fluxes emanating from the magnetic ring 31 by means of a yoke structure, and to induce an alternating-current voltage in a coil 34 wound around a bobbin 33 provided in the yoke structure. The yoke structure is constituted by a main stator 35 comprising the inner peripheral portion of the holder 21 of the sensor unit 20, and a sub stator 36 attached to the main stator 35. Each of the main stator 35 and the sub stator 36 includes claw-shaped claw poles extending axially from its inner peripheral portion and circumferentially disposed at regular intervals, and the main stator 35 and the sub stator 36 are combined together such that the claw poles of the main stator 35 circumferentially alternate with the claw poles of the sub stator 36. The annular protrusion of the cover 24 on its inner peripheral portion is fitted to the outer periphery of this sub stator 36, whereby the space in which the sensor 22 and the wireless communication means 23 of the sensor unit 20 are disposed is hermetically sealed.

In addition, when the inner ring 12 of the rolling bearing 10 rotates in unison with the rotary shaft, an alternating-current voltage is generated across both ends of the coil 34 in accordance with the rotation, and the alternating-current power thus generated is supplied to the sensor unit 20.

In the bearing device of this embodiment, as described above, the wireless communication means 23 of the sensor unit 20 includes a circuit board 25 having the wireless communication circuit 26 mounted thereon, and an external antenna 28 connected to the circuit board 25 via the cable 27. The substantially entire circuit board 25 is coated with the coating film CT, whereas the external antenna 28 is not coated with the coating film CT. A space is provided between the external antenna 28 and the resin cover 24, which covers the wireless communication means 23, whereby wavelength shortening of an electric wave emitted from the external antenna 28 is prevented. Accordingly, the dust-proofness, watertightness and communication performance of the wireless communication means 23 can be achieved concurrently.

In addition, in this bearing device, during assembly, the external antenna 28 and the circuit board 25 that has been coated with the coating film CT in advance need to be connected together via the cable 27. However, since this connecting work is not time-consuming, this bearing device is advantageous in terms of ease of assembly compared with a conventional arrangement in which a small cover covering only the wireless module is attached to the circuit board.

As the external antenna of this bearing device, an antenna is used that is designed such that its electric wave characteristics fall within a targeted frequency band while disposed in the bearing device. For example, if the external antenna is fixed to the circular plate portion of the holder and covered with the cover as in the above-described embodiment, the external antenna is designed to achieve the targeted frequency in consideration of the materials, dimensions, and physical property values such as the dielectric constants of the holder and the cover. The targeted frequency is set to the 2.4 GHz band if the wireless communication standard is Bluetooth Low Energy (BLE).

The above-described embodiment is a mere example in every respect, and the present invention is not limited thereto. The scope of the present invention is indicated by not the above description but the claims, and should be understood to include all modifications within the meaning and scope equivalent to the scope of the claims.

For example, while, in the embodiment, the holder of the sensor unit is fixedly fitted to the outer ring as the stationary ring such that the fitting portion faces axially outward, a reverse arrangement may be used in which the holder is fixedly fitted to the outer ring such that the fitting portion faces axially inward.

In addition, while, in the embodiment, the outer ring of the rolling bearing is the stationary ring, and the inner ring of the rolling bearing is the rotating ring, a reverse arrangement may be used in which the inner ring is the stationary ring, and the outer ring may is the rotating ring. In that case, the holder of the sensor unit is fixedly fitted in a cutout formed in an axial end of the inner ring.

Further, the present invention is also applicable to a bearing device including a rolling bearing other than the deep groove ball bearing as used in the embodiment, the rolling bearing being provided with the sensor and the wireless communication means.

### DESCRIPTION OF REFERENCE NUMERALS

10: Deep groove ball bearing (Rolling bearing)
11: Outer ring (Stationary ring)
12: Inner ring (Rotating ring)
13: Balls (Rolling elements)
20: Sensor unit
21: Holder
21a: Circular plate portion
22: Sensor
23: Wireless communication means
24: Cover
25: Circuit board
25a: Connector
26: Wireless communication circuit
27: Cable
28: External antenna (Antenna)
30: Power generator

## Claims

1. A bearing device comprising:
a rolling bearing (10) including an outer ring (11), an inner ring (12) disposed on a radially inner side of the outer ring, and a plurality of rolling elements (13) rollably disposed between the outer ring (11) and the inner ring (12) ;
a sensor (22) configured to detect a condition of the rolling bearing (10); and
a wireless communication means (23) for transmitting information detected by the sensor (22) to an outside,
**characterized in that** the wireless communication means (23) includes:
a circuit board (25),
a wireless communication circuit (26) mounted on the circuit board (25), and
an antenna (28) disposed separately from the circuit board (25) and connected to the circuit board (25) via a cable (27),
wherein the circuit board (25) and the wireless communication circuit (26) are coated with a coating film (CT), and the antenna (28) is not coated with the coating film (CT).

2. The bearing device according to claim 1, wherein the cable (27) is connected to a connector (25a) mounted on the circuit board (25), and the connector (25a) is not coated with the coating film (CT).

3. The bearing device according to any one of claim 1 or 2, wherein a holder (21) for holding the sensor (22) and the wireless communication means (23) is fixed to a stationary bearing ring which is one of the outer ring (11) and the inner ring (12),
wherein the holder (21) includes an annular, circular plate portion (21a) opposed to the rolling elements (13), and the circuit board (25) and the antenna (28) are fixed to a surface of the circular plate portion (21a), and
wherein a resin cover (24) covering the wireless communication means (23) is attached to the holder (21), and a space is provided between the antenna (28) and the cover (24).
